# EUROPEAN PATENT SPECIFICATION

(11) **EP 2 649 120 B1**
(45) Date of publication and mention of the grant of the patent: **19.07.2017**
(21) Application number: 11788513.7
(22) Date of filing: 30.11.2011
(51) Int. Cl.: C08J 9/06, C08J 9/08

(54) **METHOD OF MOLDING RIGID POLYURETHANE FOAMS**
VERFAHREN ZUR FORMUNG VON STARREN POLYURETHANSCHÄUMEN
PROCÉDÉ DE MOULAGE DE MOUSSES POLYURÉTHANNE RIGIDES

(30) Priority: 09.12.2010 EP 10425377
(43) Date of publication of application: 16.10.2013
(73) Proprietor: Dow Global Technologies LLC, Midland, MI 48674 (US)
(72) Inventor: GIROTTI, Cecilia, I-42015 Correggio (RE) (IT); PIGNAGNOLI, Francesca, I-42100 Regio Emilia (IT); PARENTI, Vanni, I-42012 Campagnola Emilia (IT)
(74) Representative: Beck Greener
(86) International application number: PCT/EP2011/071349
(87) International publication number: WO 2012/076375

(56) References cited:
- EP-A1- 0 560 154
- WO-A1-2007/058793
- US-A- 5 494 942
- US-A- 5 690 855

## Description

The present invention relates to a method of molding rigid polyurethane foam.

Polyurethane foam molding are conventionally manufactured by introducing a polyurethane reactive mixture containing a blowing agent into a mold cavity, the blowing agent being released in the course of the polyaddition reaction between the isocyanate and isocyanate-reactive components in the mixture, causing the reactive mixture to foam and fill the cavity.

A physical blowing agent is typically used in the production of the foam. The physical blowing agents used are all greenhouse gases to a greater or lesser extent. The fluorinated hydrocarbons are more damaging greenhouse gases than the hydrocarbons. The physical blowing agents may also be flammable, and therefore require specialist equipment in the factory to limit the risk of fire and/or explosion. Accordingly, it has been known previously to try to produce a foam using only a chemical blowing agent, such as water (See for example "Development of all water-blown polyurethane rigid foam for housing insulation" by J.Goto, K. Sasaki, S. Mashiko, Y.Kataoka, Y. Kambara and I.Ohki or "novel polyol for all water-blown rigid polyurethane foams" by Y. Miyamoto, K. Harada, C, Suzuki, H.Sato and H.Wada). Foams produced using only chemical blowing agents like water have various problems including an uneven density of the polyurethane, poor dimensional stability, high thermal conductivity and long demolding time that limits their application and processability, especially for medium to high foam thickness due to the high reaction exothermicity.

Manufacturing processes and characteristics of rigid polyurethane molded foams, including those used in appliances, are well known. See for example, Polyurethane Handbook by G. Oertel et al., 2nd edition, Hanser Publishers, 1993. The polyurethane foaming mixture is generally injected into the mold cavity at atmospheric pressure. Difficulties can be encountered in completely filling a mold cavity and in producing pieces which are uniform in density.

To aid in the flow of material into a cavity, the reduction in the pressure of the mold cavity is proposed for specific applications, see for example U.S. Patents 3,970,732 and 5,972,260. WO2007/058793 teaches a method of forming a rigid polyurethane foam at reduced pressure using a physical blowing agent.

EP0560154 A1 relates to a rigid polyurethane foam containing lithium salts. The polyurethane foam is formed using a reactive blowing agent.

It is an object of the present invention to produce a rigid polyurethane foam without the use of a physical blowing agent. It is a further object of the present invention to provide a composition which is particularly suited to forming a rigid foam without the use of a physical blowing agent.

In a first aspect of the present invention, there is provided a method of making a molded rigid polyurethane foam comprising:
injecting into a closed mold cavity a reaction mixture at a packing factor of 1.03 to 1.9, wherein the mold cavity is under a pressure of from 300 to 950 mbar, wherein the reaction mixture comprises:
   a) an organic polyisocyanate;
   b) a polyol composition;
   c) a catalyst;
   d) optionally auxiliary substances and/or additives; and
   e) a chemical blowing agent component in an amount of from 1 to 5 weight percent based on the total weight of components b) to e), the chemical blowing agent component comprising at least one chemical blowing agent,
   wherein the chemical blowing agent component is the sole blowing agent. Suitable chemical blowing agents include water and formic acid, with water being particularly preferred.

Various terms used in the text of the present invention have the following meaning:
Gel or gelation time: The gel time extends from the start of mixing to the moment from which a stick introduced into the foam draws fibers when withdrawn.
Rise time: The rise time extends from the start of mixing to the moment when foam rise is completed.
Tack free time: The tack free time extends from the start of mixing to the moment when foam surface does not stick to the operator finger.
Demolding time: The time between the end of foam injection and the mold opening
Polyol Formulation: The polyol composition including additives, such as catalysts, surfactants, excluding the blowing agent.
Premix: The polyol formulation including water.
System or Foam Formulation: The combination of premix and isocyanate component.
Free Rise Density (FRD): The density measured from a 100x100x100 mm block, obtained from the center of a free rising foam (at ambient air-pressure) produced from a total system formulation weight of 300 grams or more. FRD is reported in kg/m³.
Min. Fill Density (MFD) The density determined from the minimum weight needed to fill the in-mold cavity completely and the volume of this in-mold cavity. MFD is reported in kg/m³.
Min. Fill Weight (MFW): The minimum weight needed to fill the in- mold cavity completely. MFW is reported in kg.
Moulded Density (MD): The density determined from the injected weight in the in-mold cavity and the volume of this in-mold cavity. MD is reported in kg/m³. The measured moulded density is determined from the average of minimum 5 samples of 100x100x"thickness" in mm (including skin) by weighing the samples and dividing the weight by the measured volume of the samples.
Overpack: The overpack is defined as [injected weight* 100/MFW]. Overpack is reported in percent.
Packing factor: The packing factor is defined as [moulded density/FRD]. The packing factor is reported as a unit-less number.
Pressure: Pressures can either be air pressure in the mold or foam mass pressure on mold walls. All pressures are reported in absolute pressure, with the unit mbar (or hPa). The reference pressure is 1000 mbar = 1000 hPa = approx 1 atmosphere at sea level = 0 bar gauge.

Injection of an appliance foam formulation in a mold maintained at a low internal pressure allows foam formation without auxiliary physical blowing agent and with a low level of water. A low level of carbon dioxide as blowing agent in the foam, as produced from the reaction of water and isocyanate, reduces the Lambda increase over time. Additionally the water reduction in foam formulations allows for a reduction in the amount of isocyanate consumption.

In the present invention, more viscous systems either due to the type of polyols or due to the fast reactivity (increased catalysis) of the foaming mass can be processed. The present invention has an absence of physical blowing agent which reduces volatile organic compound emissions upon disposal of an appliance containing such a foam.

The method of the first aspect of the present invention is suitable for use with any polyurethane formulation having the required chemical blowing agent only. However, certain formulations are particularly suited for use in the claimed method.

It is preferred that the polyol component comprises one or more high functionality polyols particularly ones having a functionality of at least 5, more preferably having a functionality of from 5 to 8. Initiators for such polyols include, for example, pentaerythritol, sorbitol, sucrose, glucose, fructose or other sugars, and the like. It is preferred that the initiator molecule has a functionality of 6, and in particular is sorbitol. Such higher functional polyols will have an average hydroxyl number from about 200 mg KOH/g to about 850 mg KOH/g, preferably from about 300 mg _{KOH}/g to about 770 mg _{KOH}/g.

The high functional polyol preferably such polyols will generally comprise from 10 to 90% by weight of the total amount of polyol present, more preferably from 25 to 75% and yet more preferably from 40 to 60% by weight.

The high functional polyol can be a polyether polyol or a polyester polyol. However it is preferred that it is a polyether polyol. The polyether polyol is usually a polyoxypropylene, a polyoxyethylene or combination thereof, either as a block copolymer or a random copolymer. Polyoxypropylene polyols are particularly preferred.

The polyol component preferably comprises one or more other polyols. It is preferred to include at least one low functionality polyol along with the high functionality polyol. A low functionality polyol is one having a functionality from 2 to 4, preferably from 2 to 3. Preferred starters include glycerine and propylene glycol

The low functional polyols can be polyether polyols or polyester polyols. However it is preferred to use polyether polyols. The polyether polyol is usually a polyoxypropylene, a polyoxyethylene or combination thereof, either as a block copolymer or a random copolymer, with polyoxypropylene being preferred.

The polyol or polyol composition will generally have a hydroxyl number of from 100 mg _{KOH}/g to 1,200 mg _{KOH}/g. Preferably the hydroxyl number is from 100 mg _{KOH}/g to 500 mg _{KOH}/g and more preferably from 110 mg _{KOH}/g to 300 mg _{KOH}/g.

The low functionality polyol or polyols are preferably present in an amount of from 5 to 60 % by weight of the total amount of polyol present. Preferably, the low functionality polyol are present in an amount of from 15 to 55 % by weight, more preferably from 20 to 50 % by weight.

Low functionality polyols are generally known and are described in such publications as High Polymers, Vol. XVI; "Polyurethanes, Chemistry and Technology", by Saunders and Frisch, Merscience Publishers, New York, Vol. I, pp. 32-42, 44-54 (1962) and Vol. II, Pp. 5-6, 198-199 (1964); Organic Polymer Chemistry by K. J. Saunders, Chapman and Hall, London, pp. 323-325 (1973); and Developments in Polyurethanes, Vol. I, J.M. Burst, ed., Applied Science Publishers, pp. 1-76 (1978). Representative of suitable polyols include polyester, polylactone, polyether, polyolefin, polycarbonate polyols, and various other polyols. If desired, the polyol formulation may also contain copolymer polyols such as those of styrene/acrylonitrile (SAN), polyisocyanate polyaddition products (PIPA) or polyurea polyols (PHD).

In preferred embodiments, additional polyols can also be present in the polyol component. Suitable polyols include polyols formed from mixtures of initiators such as a high functionality starter and a lower functionality starter such as glycerin to give co-initiated polyols having functionality of from 4.5 to 7 hydroxyl groups per molecule and preferably a hydroxyl equivalent weight of 100 mg _{KOH}/g to 200 mg _{KOH}/g. Such components are preferably present in an amount of from 10 to 30 % by weight of the total amount of polyol present.

While it is generally preferred to use a polyol or polyol component having a low viscosity for ease of processing, the process conditions of the present invention allow use of a polyol formulation having a viscosity of 3000 mPa.s or greater (measured at 25°C.) without the auxiliary blowing agent. Polyol formulations having higher viscosity result in higher viscosities of the system formulation. It is believed that a higher viscosity of the system formulation hinder the drainage of liquids in the cell structure during foam rise giving smaller cell size which aids in getting lower lambda values with good retention over time.

The polyols form the bulk of the polyol formulation. It is preferred that the polyol component comprises from 40 to 95 weight percent of the polyol formulation, preferably from 60 to 95 weight percent and more preferably from 70 to 95 weight percent. The balance of the polyol formulation is made up of catalysts, cross-linkers, chain extenders, surfactants, fillers and other additives.

In a preferred embodiment of the present invention, there is provided one or more catalysts. Polyurethane catalysts provide three main purposes, namely to act as curing catalysts, blowing catalysts and trimerization catalysts. It is preferred that the catalytic package provides at least two of the curing catalyst, blowing catalyst and trimerization catalyst. It is further preferred that all three catalyst types are present.

While it is known that some catalysts may promote both blowing and curing (so-called "balanced" catalysts), such are conventionally differentiated by their tendency to favour blow reaction (urea or water and isocyanate reaction), in the case of the blowing catalyst, or the curing reaction (urethane or polyol and isocyanate reaction), in the case of the curing catalyst. In some non-limiting embodiments, a catalyst that technically may catalyze both blowing and curing may be selected for its less-favoured tendency, e.g., curing, and combined with another catalyst directed more toward the other purpose, e.g., blowing, and vice versa.

Examples of suitable blowing catalysts that may tend to favour the urea reaction are short chain tertiary amines or tertiary amines containing at least an oxygen and may include bis-(2-dimethylaminoethyl)ether; pentamethyldiethylene-triamine, triethylamine, tributyl amine, N,N-dimethylaminopropylamine, dimethylethanolamine, N,N,N',N'-tetramethylethylenediamine, or urea. In one embodiment, a combination of bis(dimethylaminoethyl)ether and dipropylene glycol may be an effective blowing catalyst, for example, in a 70/30 weight percent ratio. Combinations of any of the above may also be selected.

Examples of suitable curing catalysts that may tend to favour the urethane reaction include, generally, amidines, tertiary amines, organometallic compounds, and combinations thereof. These may include, but are not limited to, amidines such as 1,8-diazabicyclo[5.4.0]undec-7-ene and 2,3-dimethyl-3,4,5,6-tetrahydropyrimidine, and their salts.

Organometallic compounds may include organotin compounds, such as tin(II) salts of organic carboxylic acids, e.g., tin(II) diacetate, tin(II) dioctanoate, tin(II) diethylhexanoate, and tin(II) dilaurate, and dialkyltin(IV) salts of organic carboxylic acids, e.g., dibutyltin diacetate, dibutyltin dilaurate, dibutyltin maleate and dioctyltin diacetate. Bismuth salts of organic carboxylic acids may also be selected, such as, for example, bismuth octanoate. The organometallic compounds may be selected for use alone or in combinations, or, in some embodiments, in combination with one or more of the highly basic amines listed hereinabove.

Example of catalysts able to promote both blowing and curing reactions are cyclic tertiary amines or long chain amines containing several nitrogens such as triethylamine, tributylamine, dimethylbenzylamine, N-methyl-, N-ethyl-, and N-cyclohexylmorpholine, N,N,N',N'-tetra-methylethylenediamine, N,N,N',N'-tetramethylbutanediamine and - hexanediamine, pentamethyldiethylenetriamine, tetramethyldiaminoethyl ether, bis(dimethylamino-propyl)urea, dimethylpiperazine, dimethylcyclohexylamine, 1,2-dimethyl-imidazole, 1-aza-bicyclo[3.3.0]octane, triethylenediamine (TEDA).

Another class of catalysts for both blowing and curing reactions are alkanolamine compounds, such as triethanolamine, triisopropanolamine, N-methyl- and N-ethyldiethanolamine, and dimethylethanolamine may also be selected. Combinations of any of the above may also be effectively employed.

Examples of commercially available blowing, curing or blowing/curing catalyst include NIAX A-4, NIAX A6, POLYCAT 6, POLYCAT 5, POLYCAT 8, Niax A1; POLYCAT 58, DABCO T, DABCO NE 300, TOYOCAT RX 20, DABCO DMDEE, JEFFCAT ZR 70, DABCO™ 33 LV, NIAX A-33, DABCO R-8020, NIAX TMBDA, POLYCAT 77, POLYCAT 6, POLYCAT 9, POLYCAT 15, JEFFCAT ZR 50, TOYOCAT NP, TOYOCAT F94, DABCO NEM, etc. POLYCAT and DABCO catalysts are available from Air Products; TOYOCAT catalysts are available from Tosho Corporation; NIAX Catalysts are available from Momentive Performance Material; and JEFFCAT catalysts are available from Huntsman.

Some of these catalysts being solids or crystals are dissolved in the proper solvent which can be polyol, water, blowing agent, DPG or any carrier compatible with the polyurethane foaming

A third class of catalysts is the trimerization catalyst, able to promote reaction of isocyanate on itself. tris(dialkylaminoalkyl)-s-hexahydrotriazines such as 1,3,5-tris(N,N-dimethylaminopropyl)-s-hexahydrotriazine; DABCO TMR 30; DABCO K 2097 (potassium acetate), DABCO K15 (potassium octoate); POLYCAT 41, POLYCAT 43, POLYCAT 46, DABCO TMR, CURITHANE 52; tetraalkylammonium hydroxides such as tetramethylammonium hydroxide; alkali metal hydroxides such as sodium hydroxide; alkali metal alkoxides such as sodium methoxide and potassium isopropoxide; and alkali metal salts of long-chain fatty acids having 10 to 20 carbon atoms and, in some embodiments, pendant hydroxyl groups.

Some of these catalysts are solids or crystals and can be dissolved in the proper solvent which can be the polyol, water, dipropylene glycol or any other carrier with the polyurethane foaming composition.

In one particular embodiment, the combined amount of catalysts, not considering the solvents, is greater than about 1.7 percent, based on the weight of the polyol formulation. In some embodiments, the combined amount of blowing and curing catalysts is 2 percent or greater of the polyol formulation. Generally the level of blowing and curing catalyst is less than 5 percent of the polyol formulation. The amount of catalyst can vary based on the temperatures of the materials.

If desired, various additives can be incorporated into the reaction mixture for producing the rigid foams of the present invention. Examples are chain extenders, crosslinking agents, surface- active substances, foam stabilizers, cell regulators, flame retardants, fillers, dyes, pigments, hydrolysis inhibitors, fungistatic and bacteriostatic substances.

In one preferred embodiment chain extenders and/or crosslinking agents are included. Unlike the polyols, these are not polymers in their own right. Chain extenders are used to join together lower molecular weight polyurethane chains in order to form higher molecular weight polyurethane chains, and are generally grouped as having a functionality equal to 2. They are usually represented by relatively short chain or low molecular weight molecules such as hydroquinone di(•-hydroxyethyl)ether, ethylene glycol (EG), diethylene glycol (DEG), triethylene glycol, tetraethylene glycol, propylene glycol, dipropylene glycol, tripropylene glycol, 1,3-propanediol, 1,3-butanediol, 1,4-butanediol (BDO), neopentyl glycol, 1,6-hexanediol, 1,4-cyclohexanedimethanol, methyldiethanolamine, phenyldiethanolamine, combinations thereof, and the like. Particularly frequently used are 1,4-butanediol (BDO), diethylene glycol (DEG) and combinations thereof.

Crosslinking agents serve to promote or regulate intermolecular covalent bonding between polymer chains, linking them together to create a more rigid structure. The crosslinking agents are generally grouped as having a functionality equal to 3 or more. They also are usually represented by relatively short chain or low molecular weight molecules such as glycerine, ethanolamine, diethanolamine, trimethylolpropane (TMP), 1,2,6-hexanetriol, triethanol-amine,pentaerythritol, N,N,N',N'-tetrakis(2-hydroxypropyl)-ethylenediamine, diethyl-toluenediamine, dimethylthiotoluenediamine, combinations thereof, and the like. Particularly frequently used are glycerine, 1,4-trimethylolpropane (TMP), and combinations thereof.

Some molecules may contribute to both chain extension and crosslinking. Those skilled in the art will be familiar with a wide range of suitable chain extenders and/or crosslinking agents. When used, the crosslinker and/or chain extender may be used in amount up to 8 wt% of the polyol formulation.

Suitable surface-active substances are, for example, compounds which serve to aid the homogenization of the starting materials and may also be suitable for regulating the cell structure of the foam. Those are supplied under the trademarks NIAX™, DABCO™ and TEGOSTAB™ by Momentive, Air Products and Degussa, respectively. Other examples which may be mentioned are emulsifiers such as the sodium salts of castor oil sulfates or of fatty acids and also amine salts of fatty acids, eg. diethylamine oleate, diethanolamine stearate, diethanolamine ricinoleate, salts of sulfonic acids, eg. alkali metal or ammonium salts of dodecylbenzene- or dinaphthylmethanedisulfonic acid and ricinoleic acid. Foam stabilizers include for example, siloxane-oxalkylene copolymers and other orgariopolysiloxanes, ethoxylated alkylphenols, ethoxylated fatty alcohols, paraffin oils, castor oil or ricinoleate esters, Turkey red oil and peanut oil and cell regulators such as paraffins, fatty alcohols and dimethylpolysiloxanes. The above-described oligomeric acrylates having polyoxyalkylene and fluoroalkane radicals as side groups are also suitable for improving the emulsifying action, the cell structure and/or stabilizing the foam. The surface-active substances are usually employed in amounts of from 0.01 to 5 parts by weight, preferably 0.5 to 4 parts per 100 parts of polyol formulation. Agents, such as perfluoroalkanes are important additives in the field of rigid foams since they help regulate foam cell structure, hence they can be used with the present invention. Any known liquid or solid flame retardant can be used in the present invention. Generally such flame retardant agents are halogen-substituted phosphates, phosphate esters, phosphonate esters and inorganic flame proofing agents. Generally such flame retardant agents are halogen-substituted phosphates, inorganic flame proofing agents or organo-phosphous compounds. Common halogen-substituted phosphates are tricresyl phosphate, tris(1,3-dichloropropyl phosphate, tris(2,3- dibromopropyl) phosphate, tris(2-chloropropyl)-phosphate, chloropropyl bis(bromopropyl) phosphate and tetrakis (2-chloroethyl)ethylene diphosphate. Inorganic flame retardants include red phosphorous, aluminum oxide hydrate, antimony trioxide, ammonium sulfate, expandable graphite, urea or melamine cyanurate or mixtures of at least two flame retardants. In general, when present, flame retardants are added at a level of from 5 to 50 parts by weight, preferable from 5 to 25 parts by weight of the flame retardant per 100 parts per weight of the polyol formulation.

Examples of fillers include talcs, clays, silicas, calcium carbonates, graphites, glass, carbon black, plastic powders such as ABS; glass fibers or other ceramics, or polymers such as polyamide, propylene or recycled polyurethane foam. Fillers can be used in an amount of up to 20 % by weight of the polyol formulation.

Suitable polyisocyanates used in the present invention are aliphatic, cycloaliphatic, alicyclic, arylaliphatic, aromatic polyisocyanates and derivatives thereof. Such derivatives include allophonate, biuret and NCO terminated prepolymer. Aromatic isocyanates, especially aromatic polyisocyanates are preferred. It is preferred to use aromatic diisocyanates such as isomers of toluene diisocyanate (TDI), crude TDI, isomers of diphenyl methane diisocyanate, m- and p-phenyldiisocyanate, and higher functional polymethylene polyphenyl polyisocyanate; aromatic triisocyanates such as 4,4',4"-triphenyl methane triisocyanate and 2,4,6-toluene triisocyanate; aromatic tetraisocyanates; aliphatic isocyanates such as hexametliylene-1,6-diisocyanate; and alicyclic isocyanates such as hydromethylene diphenyldiisocyanate.

In one embodiment, it is preferred to use polymethylene polyphenylene polyisocyanates (MDI). As used herein MDI refers to polyisocyanates selected from diphenylmethane diisocyanate isomers, polyphenyl polymethylene polyisocyanates and derivatives thereof bearing at least two isocyanate groups. The crude, polymeric or pure MDI can be reacted with polyols or polyamines to yield modified MDI. The MDI advantageously has an average of from 2 to 3.5, and preferably from 2.0 to 3.2 isocyanate groups per molecule. Especially preferred are methylene-bridged polyphenyl polyisocyanates and mixtures thereof with crude diphenylmethane diisocyanate, due to their ability to cross-link the polyurethane. The crude MDI preferably contains from 30 to 60 percent of diphenylmethane diisocyanate isomers.

Mixtures of isocyanates and crude polyisocyanates polyisocyanates as well as MDI and TDI prepolymers, blends thereof with polymeric and monomeric MDI may also be used in the practice of this invention. The total amount of polyisocyanate used to prepare the foam in the present inventions should be sufficient to provide an isocyanate reaction index of from 100 to 300. Preferably the index is from 105 to 200. More preferably the index is from 110 to 160. An isocyanate reaction index of 100 corresponds to one isocyanate group per isocyanate reactive hydrogen atom present, such as from water and the polyol composition.

The method of the present invention is undertaken in the absence of physical blowing agents such as hydrocarbons, monofunctional alcohols, acetals or partially halogenated hydrocarbons and methyl formate or rare gases such as Krypton or Xenon.

The blowing agent to be used consists of at least one chemical blowing agent. The total amount of chemical blowing agent is present in a level of from 1 weight percent to 5 weight percent, based on the total weight of the polyol formulation (the formulation excluding isocyanate). Preferably the amount of chemical blowing agent is from 2.5 to 4.5 weight percent and more preferably from 2.5 to 3.5 weight percent. A chemical blowing agent content which is too high can lead to increased brittleness and thermal conductivity of the foam, and the aging of the foam (increase with time of the thermal conductivity due to cell gas diffusion of formed CO₂ out of the foam). The blowing agent is preferably water or formic acid, with water being particularly preferred.

The catalyst, blowing agent and other optional components are preferably mixed with the polyol components. The foam is made by mixing the polyol formulation and the isocyanate components at approximate 20°C in the presence of the blowing and injecting into a mold cavity which has an internal air pressure below reference pressure of 1000 mbar and under such conditions that the polyols and polyisocyanate(s) react and cure. It is usually not necessary to pre-heat the components or apply heat to the reaction mixture in order to obtain a good reaction and cure but heating may be used if desired. However, the in-mold cavity is generally heated, preferably at 30 to 60°C, more preferably from 40 to 50°C, to provide efficient adhesion of the foam to the mold or to the plastic and metal liner. The mold has an internal air pressure, according to this invention, which is sufficient to provide a good filling with the used foaming composition. The internal mold pressure can vary between 300 and 950 mbar, preferably between 400 and 900 mbar, and more preferably from 500 to 850 mbar. The internal air pressure is controlled in such that the moulded density can be obtained with the right balance of filling vs. gelling time. Alternatively, applying a vacuum just after the injection of the foaming composition may be done, but this is not the preferred option. By injection under reduced in-mold pressure, or applying vacuum just after injection, allows the foaming composition to flow and fill the cavity quicker and more efficiently than with the present technology based on atmospheric pressure, hence more viscous, or more reactive, foam formulations can be used with the present invention. Techniques for applying a partial vacuum to a mold cavity are known in the art, see for example U.S. Patents 5,454,582 and 5,972,260. Prior to injection under reduced pressure in the mold cavity, the cavity may be purged with an inert gas, such as nitrogen, for safety reasons when flammable blowing agents are used in the foam formulation.

The molded density of the foam is generally from 35 to 50 kg/m³. To obtain the foams within the desired density range under the partial vacuum employed and to assure the entire mold cavity is properly filled, the mold is generally filled to a packing factor of greater than 1.03 and is not higher than 1.9. Preferably the packing factor is set from 1.06 to 1.6 and more preferably from 1.1 to 1.5. The demold time, is determined by the time needed for a foamed object such as a refrigerator to be sufficiently dimensionally stable when taken out of the jig. The demold time is desirably from 5 to 15 minutes, preferably less than 13 minutes, and more preferably from 5 to 12 minutes for standard refrigerated cabinets with a wall thickness of 4 to 7 cm, thicker walls will obviously require longer demold times e.g. 20 minutes for a 12 cm thickness. A way to compare demold time performance of the polyurethane formulation is to measure the post expansion of the molded foams without liners, produced with the different polyurethane formulations. The measure is performed 24 hours after foaming. Foams are demolded at different times to allow sufficient mass expansion which can be compared relative to the original mold thickness. The post expansion (at time t) is the maximum thickness of the foam divided by the mold thickness. The results are reported in percent. Currently, a total deformation of 5% on width dimension of a refrigerated cabinet is considered acceptable.

The rigid polyurethane foams produced from the process of the present invention are preferably used as heat-insulating for foam-filling cavities in refrigerated cabinets, mainly for commercial appliance applications, as jackets of hot- water storage tanks and in pipe-in-pipe (PIP) discontinuous process applications. The products may also be used as a composite element in such applications.

The following examples are given to illustrate the invention and should not be interpreted as limiting in anyway.

A description of the raw materials used in the examples is as follows:
**Polyol 1** A sorbitol-initiated polyoloxypropylene polyether polyol; hydroxyl number 482; Functionality (F)= 6
**Polyol 2** A triol (glycerin) inititated-polyoxypropylene polyol with a molecular weight of approximately 1000; hydroxyl number 156; functionality (F) = 3
**Polyol 3** A propylene glycol-initiated polyoxypropylene polyol with a molecular weight of approximately 1000; hydroxyl number 110; functionality (F) = 2
**Polyol 4** A sucrose/glycerine initiated polyoxypropylene polyol; hydroxyl number 360; functionality (F) = 4.6
**Catalyst 1** Pentamethyldiethylenetriamine (PMDETA)
**Catalyst 2** N,N-dimethylcyclohexyl amine (DMCHA)
**Catalyst 3** N,N-dimethyl benzyl amine (DMBA)
**Surfactant** polysiloxane-polyether copolymer silicone surfactant
**Flame Retardant** Triethyl Phosphate (TEP)
**Additive** Potassium acetate (31.5%) in diethylene glycol (68.5%)
**Isocyanate** Polymethylene polyphenylisocyanate; functionality 2.7; isocyanate content 27%.

All foams are made using a high pressure Cannon machine equipped with a mix-head attached to the mold injection hole, in a laboratory where the atmospheric pressure is about 1,000 mbar (or hPa). Premix and isocyanate are injected at a pressure of 90 bars or higher. The Brett mold is made of aluminum with dimensions of 194x35x6 cm and has no venting to allow the creation of an under pressure in the mold during foaming, therefore there is no extrusion of the foaming mass. The internal pressure of the mold is controlled via a pipe connected to a 500 liter buffer tank that is connected to a medium capacity vacuum pump (1500 1/min). The vacuum in the buffer tank, and thus the in mold air pressure, is maintained with control valves. The foams produced in this Brett mold can be used to measure molded density, density distribution, and compression strength. Foam adhesion properties (tensile bond strength) to metal substrates are measured by producing sandwich Brett panels with two metal facings at the top and bottom of the panels. The temperature of the mold is about 45°C. The release agent applied to the mold is ACMOS 37-7900, supplied from Acmos.

Foam compressive strength in kPa is measured according to EN ISO 844 (2009).

Foam adhesion properties in kPa are measured according to EN 14509 (2008).

### EXAMPLES

Formulations were produced according to the components in Table 1 below.

**Table 1**

| | System 1 | System 2 |
|---|---|---|
| Polyol 1 | 40.4 | 40.8 |
| Polyol 2 | 18 | 18.2 |
| Polyol 3 | 9 | 9.3 |
| Polyol 4 | 16.5 | 16.6 |
| Flame Retardant | 8 | 8 |
| Slicone Surfactant | 2 | 2 |
| Catalyst 1 | 0.1 | 0.1 |
| Catalyst 2 | 0.4 | 0.45 |
| Catalyst 3 | 1.1 | 1.1 |
| Additive | 0.4 | 0.4 |
| Water | 4.05 | 3.05 |
| Total | 100.0 | 100.0 |
| Isocyanate | 150 | 134 |
| ISO/POL ratio | 150/100 | 134/100 |

The polyol formulations were mixed with the isocyanate and injected into a mold at ambient pressure of about 1000 mbar to produce standard foam (Comparative Examples 1 and 3) and molds maintained at 800 mbar (Comparative Example 2 and Example 1).

**Table 2**

| | System 1 | | System 2 | |
|---|---|---|---|---|
| | Comparative Example 1 | Example 1 | Comparative Examples 2 | Example 2 |
| Injection Pressure | 1 Bar | 0.8 Bar | 1 Bar | 0.8 Bar |
| CT (s) | 13-14 | 13-14 | 10-11 | 10-11 |
| GT (s) | 70 | 70 | 65 | 65 |
| TFT (s) | | | 98 | 98 |
| FRD(kg/m³) | 27.5 | 27.5 | 32.4 | 32.4 |
| How Index BRETT 40°C DMT 12 min | 1.425 | 1.172 | 1.377 | 1.082 |
| Overpack % | 14.7 | 29.7 | 15 | 28 |
| Moulded Density (kg/m³) | 44.96 | 41.93 | 51.3 | 45 |
| Average Density Deviation | 1.086 | 0.844 | 1.082 | 0.730 |
| Compressive strength overall average (KPa) | 253.1 | 225.2 | 324.3 | 250.7 |
| Tensile bond strength average (KPa) TOP area | 167.4 | 166.5 | 185.7 | 181.7 |
| Corrected Exp 8min (mm) | 4.6 | 3.3 | 4.82 | 3.0 |

As can be seen from Comparative Example 1 in Table 2, system 1, molded at 15 percent overpacking leads to an applied density of 45 kg/m³. The 20 percent reduction in mold air pressure in Example 1 leads to the expected reduction in foam density. Indeed, a much higher than normal overpack had to be applied at reduced pressure to avoid immediate shrinkage of the resulting foam. The produced foam with molded density of 41.83 kg/m³ remained dimensionally stable. The results show that the density deviation values throughout the molded article is improved at 800 mbar pressure in the mold. In addition the 20 percent reduction in mold air pressure leads also to a significant improvement of the foam demolding properties as demonstrated by foam post expansion values at 8 minutes of demolding time in Example 1.

The particularly preferred Example (Example 2) takes advantage of the reduced water content to improve the adhesion PU system property while keeping the same applied density. In Comparative Example 2, a lower water content leads, at reference ambient pressure conditions, to improved adhesion properties if compared to Comparative Example 1. However, Comparative Example 2 shows that the water level reduction from 4 to 3 percent in the polyol blend leads to very high and consequently unacceptable density (51 - 52 kg/m³), in spite of a tensile bond strength improvement (foam adhesion). In Example 2, according to the present invention, when a reduced pressure is applied to the mold cavity, the positive effects of the lower water content on the adhesion properties and an acceptable applied density as processed in current technology application are both seen. In addition, Example 2 mantains a reduction of the foam density deviation values throughout the molded article and a significant improvement of the foam demolding properties.

## Claims

1. A method of making a molded rigid polyurethane foam comprising:
injecting into a closed mold cavity a reaction mixture at a packing factor of 1.03 to 1.9, wherein the mold cavity is under a pressure of from 300 to 950 mbar, wherein the reaction mixture comprises:
a) an organic polyisocyanate;
b) a polyol composition;
c) a catalyst;
d) optionally auxiliary substances and/or additives; and
e) a chemical blowing agent component in an amount of from 1 to 5 weight percent based on the total weight of components b) to e), the chemical blowing agent component comprising at least one chemical blowing agent,
wherein the chemical blowing agent component is the sole blowing agent.

2. A method as claimed in Claim 1, wherein the chemical blowing agent is water.

3. A method as claimed in Claim 1 or Claim 2, wherein the packing factor is in the range of from 1.1 to 1.5.

4. A method as claimed in Claim 1 or Claim 2 or Claim 3, wherein the mold cavity pressure is from 0.7 to 0.9 bar.

5. A method as claimed in any one of the preceding claims, wherein the foam has an applied density of from 35 to 50 kg/m³.

6. A method as claimed in any one of the preceding claims, wherein component b) comprises a polyol having a functionality of from 5 to 8.

7. A method as claimed in claim 5, wherein the component b) additionally comprises at least one polyol having a functionality of from 2 to 4.

8. A method as claimed in any one of claims 5 and 6, wherein the at least one polyol having a functionality of from 5 to 8 comprises from 35 to 65 weight percent of component b).

9. A method as claimed in any one of the preceding claims, wherein the reaction mixture additionally comprises a silicone surfactant.

10. A method as claimed in any one of the preceding claims, wherein the catalyst comprises at least one of a gelling catalyst, a blowing catalyst and a trimerization catalyst.

11. A method as claimed in Claim 9, wherein the catalyst comprises at least two of a gelling catalyst, a blowing catalyst and a trimerization catalyst.

12. A method as claimed in any one of the preceding claims, wherein the water is present in an amount of from 2.5 to 3.5 weight percent.

13. A method of making a refrigerated cabinet, a hot-water storage tank or a pipe-in-pipe insulation systems comprising the step of making a molded rigid polyurethane foam according to the method of any one of Claims 1 to 12.

## Patentansprüche

1. Ein Verfahren zum Herstellen eines geformten Polyurethanhartschaums, das Folgendes beinhaltet:
Einpressen eines Reaktionsgemischs in eine geschlossene Formhöhlung mit einem Verdichtungsfaktor von 1,03 bis 1,9, wobei die Formhöhlung unter einem Druck von 300 bis 950 mbar steht, wobei das Reaktionsgemisch Folgendes beinhaltet:
a) ein organisches Polyisocyanat;
b) eine Polyolzusammensetzung;
c) einen Katalysator;
d) optional Hilfsstoffe und/oder Zusatzstoffe; und
e) eine chemische Treibmittelkomponente in einer Menge von 1 bis 5 Gewichtsprozent, bezogen auf das Gesamtgewicht der Komponenten b) bis e), wobei die chemische Treibmittelkomponente mindestens ein chemisches Treibmittel beinhaltet,
wobei die chemische Treibmittelkomponente das einzige Treibmittel ist.

2. Verfahren gemäß Anspruch 1, wobei das chemische Treibmittel Wasser ist.

3. Verfahren gemäß Anspruch 1 oder Anspruch 2, wobei der Verdichtungsfaktor im Bereich von 1,1 bis 1,5 liegt.

4. Verfahren gemäß Anspruch 1 oder Anspruch 2 oder Anspruch 3, wobei der Formhöhlungsdruck von 0,7 bis 0,9 bar beträgt.

5. Verfahren gemäß einem der vorhergehenden Ansprüche, wobei der Schaum eine angewandte Dichte von 35 bis 50 kg/m³ aufweist.

6. Verfahren gemäß einem der vorhergehenden Ansprüche, wobei Komponente b) ein Polyol mit einer Funktionalität von 5 bis 8 beinhaltet.

7. Verfahren gemäß Anspruch 5, wobei die Komponente b) zusätzlich mindestens ein Polyol mit einer Funktionalität von 2 bis 4 beinhaltet.

8. Verfahren gemäß einem der Ansprüche 5 und 6, wobei das mindestens eine Polyol mit einer Funktionalität von 5 bis 8 35 bis 65 Gewichtsprozent von Komponente b) ausmacht.

9. Verfahren gemäß einem der vorhergehenden Ansprüche, wobei das Reaktionsgemisch zusätzlich ein Silicontensid beinhaltet.

10. Verfahren gemäß einem der vorhergehenden Ansprüche, wobei der Katalysator mindestens eines von einem Gelierkatalysator, einem Treibkatalysator und einem Trimerisierungskatalysator beinhaltet.

11. Verfahren gemäß Anspruch 9, wobei der Katalysator mindestens zwei von einem Gelierkatalysator, einem Treibkatalysator und einem Trimerisierungskatalysator beinhaltet.

12. Verfahren gemäß einem der vorhergehenden Ansprüche, wobei das Wasser in einer Menge von 2,5 bis 3,5 Gewichtsprozent vorhanden ist.

13. Ein Verfahren zum Herstellen eines Kühlschranks, eines Warmwasserspeichertanks oder eines Rohr-in-Rohr-Isoliersystems, beinhaltend den Schritt des Herstellens eines geformten Polyurethanhartschaums nach dem Verfahren gemäß einem der Ansprüche 1 bis 12.

## Revendications

1. Une méthode pour fabriquer une mousse de polyuréthane rigide moulée comprenant :
le fait d'injecter dans une cavité de moule fermée un mélange réactionnel à un coefficient de remplissage de 1,03 à 1,9, la cavité de moule étant sous une pression allant de 300 à 950 mbar, le mélange réactionnel comprenant :
a) un polyisocyanate organique ;
b) une composition de polyol ;
c) un catalyseur ;
d) facultativement des substances auxiliaires et/ou des additifs ; et
e) un constituant agent d'expansion chimique en une quantité allant de 1 à 5 pour cent en poids rapporté au poids total des constituants b) à e), le constituant agent d'expansion chimique comprenant au moins un agent d'expansion chimique,
le constituant agent d'expansion chimique étant le seul agent d'expansion.

2. Une méthode telle que revendiquée dans la revendication 1, dans laquelle l'agent d'expansion chimique est de l'eau.

3. Une méthode telle que revendiquée dans la revendication 1 ou la revendication 2, dans laquelle le coefficient de remplissage est compris dans la gamme allant de 1,1 à 1,5.

4. Une méthode telle que revendiquée dans la revendication 1 ou la revendication 2 ou la revendication 3, dans laquelle la pression de la cavité de moule va de 0,7 à 0,9 bar.

5. Une méthode telle que revendiquée dans n'importe laquelle des revendications précédentes, dans laquelle la mousse a une masse volumique appliquée allant de 35 à 50 kg/m³.

6. Une méthode telle que revendiquée dans n'importe laquelle des revendications précédentes, dans laquelle le constituant b) comprend un polyol ayant une fonctionnalité allant de 5 à 8.

7. Une méthode telle que revendiquée dans la revendication 5, dans laquelle le constituant b) comprend de plus au moins un polyol ayant une fonctionnalité allant de 2 à 4.

8. Une méthode telle que revendiquée dans n'importe laquelle des revendications 5 et 6, dans laquelle l'au moins un polyol ayant une fonctionnalité allant de 5 à 8 constitue de 35 à 65 pour cent en poids du constituant b).

9. Une méthode telle que revendiquée dans n'importe laquelle des revendications précédentes, dans laquelle le mélange réactionnel comprend de plus un tensioactif siliconé.

10. Une méthode telle que revendiquée dans n'importe laquelle des revendications précédentes, dans laquelle le catalyseur comprend au moins un élément parmi un catalyseur gélifiant, un catalyseur d'expansion et un catalyseur de trimérisation.

11. Une méthode telle que revendiquée dans la revendication 9, dans laquelle le catalyseur comprend au moins deux éléments parmi un catalyseur gélifiant, un catalyseur d'expansion et un catalyseur de trimérisation.

12. Une méthode telle que revendiquée dans n'importe laquelle des revendications précédentes, dans laquelle l'eau est présente en une quantité allant de 2,5 à 3,5 pour cent en poids.

13. Une méthode pour fabriquer une armoire frigorifique, une cuve de stockage d'eau chaude ou un système d'isolation pipe-in-pipe comprenant l'étape consistant à fabriquer une mousse de polyuréthane rigide moulée selon la méthode de n'importe laquelle des revendications 1 à 12.
